**Europäisches Patentamt**

**European Patent Office**

**Office européen des brevets**

(11) Veröffentlichungsnummer: **0 254 963**
**B1**

(12) # EUROPÄISCHE PATENTSCHRIFT

(45) Veröffentlichungstag der Patentschrift:
26.09.90

(51) Int. Cl.⁵: **G21C 13/02**

(21) Anmeldenummer: 87110232.3

(22) Anmeldetag: 15.07.87

(54) Kernkraftwerk mit einem metallischen Reaktordruckbehälter.

(30) Priorität: 28.07.86 DE 3625436

(43) Veröffentlichungstag der Anmeldung:
03.02.88 Patentblatt 88/5

(45) Bekanntmachung des Hinweises auf die Patenterteilung:
26.09.90 Patentblatt 90/39

(84) Benannte Vertragsstaaten:
CH DE ES FR LI NL

(56) Entgegenhaltungen:
DE-A- 2 850 651
DE-A- 2 916 951
FR-A- 2 285 684
FR-A- 2 455 694
FR-A- 2 525 378

(73) Patentinhaber: Siemens Aktiengesellschaft,
Wittelsbacherplatz 2, D-8000 München 2(DE)

(72) Erfinder: Michel, Eberhard, Danteweg 10,
D-8500 Nürnberg 41(DE)
Erfinder: Scholz, Manfred, Zeissstrasse 8,
D-8520 Erlangen(DE)
Erfinder: Kätscher, Peter, Lindenstrasse 2,
D-8521 Langensendelbach(DE)
Erfinder: Berndt, Wolfgang, Hüttendorfer Strasse 40,
D-8520 Erlangen(DE)

**Beschreibung**

Die Erfindung betrifft ein Kernkraftwerk mit einem metallischen Reaktordruckbehälter, der Kühlmittelstutzen zum Anschluß von Kühlmittelleitungen aufweist und von einem biologischen Schild aus Beton umgeben ist, in dem der Reaktordruckbehälter mit einer an den Kühlmittelstutzen angreifenden Abstützung gehalten wird.

Bei der aus der DE-B 24 45 225 bekannten Abstützung ruhen die Kühlmittelstutzen auf einem aus Teilsegmenten zusammengesetzten Tragring, der in dem biologischen Schild mittels eingelassener Ankerschrauben gegen Abheben gesichert ist. Eine seitliche Festlegung der Kühlmittelstutzen ist nicht zu erkennen.

Die Erfindung geht demgegenüber von der Aufgabe aus, die Abstützung ohne einen den gesamten Reaktordruckbehälter umfassenden Tragring auszuführen und dennoch zu erreichen, daß auch Seitenkräfte aufgenommen werden.

Erfindungsgemäß ist vorgesehen, daß die Abstützung mindestens ein einen Kühlmittelstutzen umgebendes Tragrohr umfaßt, das mit seiner Innenseite an dem Kühlmittelstutzen und mit seiner Außenseite an dem biologischen Schild verankert ist.

Bei der erfindungsgemäßen Abstützung werden alle Kräfte über das Tragrohr unmittelbar in den Beton des biologischen Schildes abgetragen. Da das Tragrohr aber im Vergleich zu dem bekannten Tragring ein kleines und leichtes Bauteil ist, kann es in Bezug auf den Kühlmittelstutzen und den biologischen Schild genau ausgerichtet und montiert werden. Damit ergibt sich ein eindeutig überschaubarer Kräftefluß auch bei radialen und axialen Wärmedehnungen des Tragrohres sowie des Reaktordruckbehälters mit seinen Kühlmittelstutzen. Der Reaktordruckbehälter wird hierbei in allen Betriebszuständen in der gewünschten Mitten-und Achslage gehalten.

Die Verankerung an der Innenseite des Tragrohres umfaßt vorteilhaft Knaggen, d.h. Vorsprünge, die in Ausnehmungen hineinragen, so daß in Längsrichtung der Ausnehmungen eine Bewegungsmöglichkeit besteht. Vorzugsweise ist zwischen den Knaggen und den Ausnehmungen ein Spiel von 0,1 bis 0,5 mm vorgesehen. Eine gleichwertige Ausbildung kann auch an der Außenseite des Tragrohres vorliegen, wo das Tragrohr in dem biologischen Schild verankert ist. Dort werden entsprechende Ankerplatten zur Einleitung der Kräfte in den Beton benutzt.

Das Tragrohr ist vorzugsweise zylindrisch ausgebildet und an zwei Positionen seiner Längsachse über jeweils vier um 90° versetzten Knaggen gehalten. Eine solche symmetrische Ausbildung ist gegen Wärmedehnungen besonders unempfindlich. Ferner kann das Tragrohr mit zwei vorzugsweise quadratischen Tragplatten abgestützt sein, die in gegenüberliegenden Seiten einer Betonwand des biologischen Schildes befestigt sind. Dabei können die Tragplatten mit Spannschrauben verbunden sein, so daß eine stabile Konstruktion entsteht, bei der der Beton überwiegend durch Druckspannungen belastet ist. Schubkräfte können über Dübel, die an den Tragplatten befestigt sind, oder ähnliche Elemente an den Beton übertragen werden.

An dem Tragrohr kann eine Wärmedämmung sitzen, um die Wärmeeinleitung in den Beton des biologischen Schildes zu verringern. Ferner ist es vorteilhaft, wenn an der Innenseite des Tragrohres ein bis an den Außendurchmesser des Kühlmittelstutzens reichender Dichtring befestigt ist. Mit einer solchen Dichtung kann eine unerwünschte Passage von Gasen oder Dämpfen durch den Zwischenraum zwischen dem Tragrohr und dem Kühlmittelstutzen auf auslegungsgemäße Größenordnungen begrenzt werden.

Für die eingangs genannte Aufnahme von Seitenkräften genügt im Prinzip ein Tragrohr an einem einzelnen Kühlmittelstutzen. Da aber an Reaktordruckbehältern üblicherweise mehrere Kühlmittelschleifen mit Einlaß- und Auslaßleitungen angeschlossen sind, kann man die Kräfte vorteilhaft auf mehrere Tragrohre verteilen. Besonders bei einem Druckwasserreaktor sollten alle Kühlmittelstutzen mit einem Tragrohr versehen sein.

Zur näheren Erläuterung wird im folgenden ein Ausführungsbeispiel der Erfindung anhand der Zeichnung beschrieben, in der in

Figur 1 eine schematische Übersichtsdarstellung, in

Figur 2 eine vergrößerte Teildarstellung der Figur 1 und in

Figur 3 ein Schnitt durch einen Kühlmittelstutzen senkrecht zu dessen Längsachse gezeigt ist.

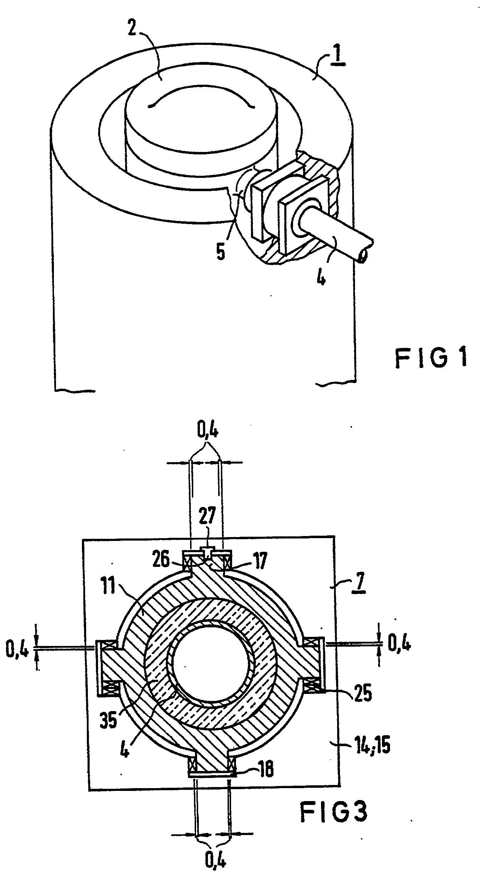

In Figur 1 ist von einem Kernkraftwerk mit einem Druckwasserreaktor vereinfacht ein biologischer Schild 1 aus Beton gezeichnet, der einen Reaktordruckbehälter 2 als Strahlenabschirmung umgibt. Der Reaktordruckbehälter 2 ist bekanntlich ein dickwandiges Metallgefäß mit z.B. 20 cm Wandstärke, in dem der aus Brennelementen zusam mengesetzte Kern des Reaktors angeordnet ist, so daß sich ein Gesamtgewicht von 600 t und mehr ergibt. Die im Kern erzeugte Wärme wird mit unter Druck stehendem Wasser abgeführt. Das Wasser dient als Primärkühlmittel und wird über, z.B. drei Kühlmittelschleifen mit Dampferzeugern und Kühlmittelpumpen geführt, die nicht dargestellt sind. Die drei Kühlmittelschleifen umfassen sechs Kühlmittelleitungen 4, die durch den biologischen Schild 1 hindurchführen. Die Kühlmittelleitungen 4 münden an Kühlmittelstutzen 5, die mit dem Reaktordruckbehälter verbunden sind. An allen sechs Kühlmittelstutzen 5 ist der Reaktordruckbehälter 2 mit der gleichen Abstützung 7 gehalten.

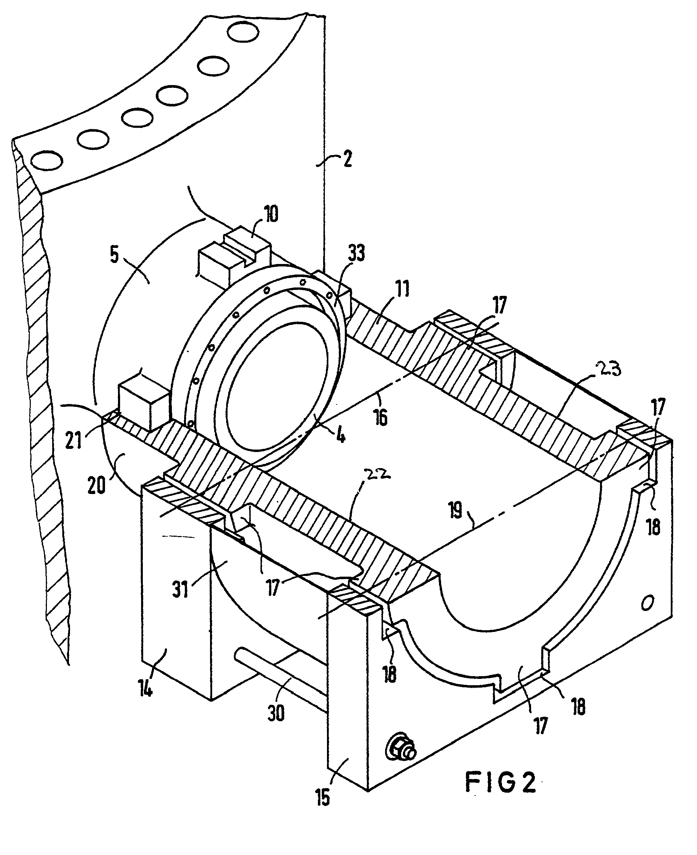

In Figur 2 ist einer der am Reaktordruckbehälter 2 sitzenden Kühlmittelstutzen 5 dargestellt, von dem die Kühlmittelleitung 4 ausgeht. Man erkennt, daß der Kühlmittelstutzen 5 mit einer Wandstärke von ca. 20 cm mehr als dreimal so dick ist wie die Kühlmittelleitung 4 mit ca. 6 cm Wandstärke. Über den Außendurchmesser des Kühlmittelstutzens 5 von 120 cm ragen vier um 90° versetzte Knaggen 10 auf, die in vertikaler und horizontaler Richtung jeweils um 13 cm vorspringen und 30 cm breit sind. Dort greift ein zylindrisches Tragrohr 11 an, das eine Wanddicke von 22 cm hat und seinerseits in zwei quadratischen Platten 14 und 15 als Gegenlager gehalten ist.

Das Tragrohr 11 greift ebenfalls mit zweimal vier an seiner Außenseite 23 vorgesehenen um 90° versetzten Knaggen 17 in Ausnehmungen 18 der Platten 14 und 15, so daß Seitenkräfte aufgenommen werden. Die Knaggen 17 liegen in der Längsachse des Tragrohres 11 an zwei um etwa den Tragrohrdurchmesser versetzten Positionen 16, 19 und erstrecken sich symmetrisch in vertikaler und horizontaler Richtung. Sie haben praktisch die gleichen Abmessungen wie die Knaggen 10, über die das Tragrohr 11 mit Ausnehmungen 21 greift, die an dem dem Reaktordruckbehälter 2 zugekehrten Ende 20 des Tragrohres 11 an seiner Innenseite 22 vorgesehen sind. In den Ausnehmungen 21 ist der Reaktordruckbehälter 2 über die Kühlmittelstutzen 5 mit den Knaggen 10 gelagert. Dabei ist der Abstand zwischen den Knaggen 10 und den ihnen zugekehrten Knaggen 17 nur etwa halb so groß wie der Abstand zwischen den Positionen 16 und 19.

In Figur 2 ist noch zu sehen, daß die Platten 14 und 15 mit Spannschrauben 30 verbunden sind, die zunächst gegen ein Distanzrohr 31 angezogen werden können. Nach dem Einbetonieren, bei dem der Zwischenraum zwischen den Platten 14 und 15 außerhalb des Distanzrohres 31 mit Beton gefüllt ist, kann dann durch Nachspannen der Spannschrauben 30 eine Druckkraft auf den Beton aufgebracht werden.

In Figur 2 ist ferner zu erkennen, daß an dem dem Kühlmittelstutzen 5 zugekehrten Ende des Tragrohres 11 ein als Dichtung wirkender Ring 33 vorgesehen ist, der an der Stirnseite des Kühlmittelstutzens angeschraubt sein kann. Der Dichtring 33 verschließt bestmöglich den freien Zwischenraum zwischen dem Kühlmittelstutzen 5 und dem Tragrohr 11.

In Figur 3 ist zu sehen, daß zwischen dem Tragrohr 11 mit seinen Knaggen 17 und den entsprechenden Ausnehmungen 18 in den Platten 14 und 15 ein zur Aufnahme von Wärmedehnungen ausreichendes Spiel von jeweils 0,4 mm vorgesehen ist. Die sich in horizontaler Richtung erstreckenden Knaggen 17 des Tragrohres 11 sind außerdem mit Lagerplatten 25 abgefangen. In der obersten Knagge 17 ist eine Nut 26 vorgesehen. In diese greift eine Paßfeder 27, um eine exakte Führung zu erhalten, ohne daß Längsdehnungen des Kühlmittelstutzens 5 oder der Kühlmittelleitung 4 behindert sind.

Aus der Figur 3 ist ferner zu ersehen, daß im Ringspalt zwischen der Kühlmittelleitung 4 und dem Tragrohr 11 eine Wärmedämmung 35 vorgesehen ist. Sie verringert die Wärmeeinbringung von der Kühlmittelleitung 4 über das Tragrohr 11 in den Beton des biologischen Schildes 1.

## Patentansprüche

1. Kernkraftwerk mit einem metallischen Reaktordruckbehälter (2), der Kühlmittelstutzen (5) zum Anschluß von Kühlmittelleitungen (4) aufweist und von einem biologischen Schild (1) aus Beton umgeben ist, in dem der Reaktordruckbehälter mit einer an den Kühlmittelstutzen angreifenden Abstützung (7) gehalten wird, **dadurch gekennzeichnet,** daß die Abstützung (7) mindestens ein einen Kühlmittelstutzen (5) umgebendes Tragrohr (11) umfaßt, das mit seiner Innenseite (22) an dem Kühlmittelstutzen (5) und mit seiner Außenseite (23) an dem biologischen Schild (1) verankert ist.

2. Kernkraftwerk nach Anspruch 1, **dadurch gekennzeichnet,** daß die Verankerung Knaggen (17) umfaßt, die formschlüssig in Ausnehmungen (18) hineinragen.

3. Kernkraftwerk nach Anspruch 2, **dadurch gekennzeichnet,** daß zwischen den Ausnehmungen (18) und den Knaggen (17) ein Spiel von 0,1 bis 0,5 mm vorgesehen ist.

4. Kernkraftwerk nach Anspruch 1, 2 oder 3, **dadurch gekennzeichnet,** daß das Tragrohr (11) zylindrisch ausgebildet ist und an zwei Positionen (16, 19) seiner Längsachse über jeweils vier um 90° versetzte Knaggen (17) gehalten ist.

5. Kernkraftwerk nach Anspruch 4, **dadurch gekennzeichnet,** daß das Tragrohr (11) an zwei vorzugsweise quadratischen Tragplatten (14, 15) befestigt ist, die auf gegenüberliegenden Seiten einer Betonwand des biologischen Schildes (1) befestigt sind.

6. Kernkraftwerk nach Anspruch 5, **dadurch gekennzeichnet,** daß die Tragplatten (14, 15) mit Spannschrauben (30) verbunden sind.

7. Kernkraftwerk nach einem der Ansprüche 1 bis 6, **dadurch gekennzeichnet,** daß an dem Tragrohr (11) eine Wärmedämmung (35) sitzt.

8. Kernkraftwerk nach einem der Ansprüche 1 bis 7, **dadurch gekennzeichnet,** daß an der Innenseite des Tragrohres (11) eine bis an den Außendurchmesser des Kühlmittelstutzens (5) reichender Dichtring (33) befestigt ist.

9. Kernkraftwerk nach einem der Ansprüche 1 bis 8, **dadurch gekennzeichnet,** daß an allen Kühlmittelstutzen (5) der Kühlmittelschleifen eines Druckwasserreaktors Tragrohre (11) vorgesehen sind.

## Revendications

1. Centrale nucléaire comportant un caisson métallique sous pression (2), qui comporte des tubulures (5) véhiculant un fluide sous pression et destinées à raccorder des canalisations (4) véhiculant le fluide sous pression et est entouré par un bouclier biologique en béton (1), dans lequel le caisson sous pression du réacteur est maintenu au moyen d'un support (7) s'accrochant aux tubulures véhiculant le fluide de refroidissement, caractérisée par le fait que le support (7) entoure au moins un tube de support (11), qui entoure une tubulure (5) véhiculant le fluide de refroidissement et est ancré par sa face intérieure (22) sur la tubulure (5) véhiculant le fluide de refroidissement et par sa face extérieure (23) sur le bouclier biologique (1).

2. Centrale nucléaire suivant la revendication 1, caractérisée par le fait que l'ancrage inclut des taquets (17), qui s'engagent, selon une liaison par formes complémentaires, dans des évidements (18).

3. Centrale nucléaire suivant la revendication 2, caractérisée par le fait qu'un jeu compris entre 0,1 et 0,5 mm est prévu entre les évidements (18) et les taquets (17).

4. Centrale nucléaire suivant la revendication 1, 2 ou 3, caractérisée par le fait que le tube de support (11) possède une forme cylindrique et est maintenu, en deux positions (16, 19) de son axe longitudinal, au moyen de respectivement quatre taquets (17) décalés de 90°.

5. Centrale nucléaire suivant la revendication 4, caractérisée par le fait que le tube de support (11) est fixé à deux plaques de support (14, 15) de préférence carrées, qui sont fixées sur les côtés opposés d'une paroi en béton du bouclier biologique (1).

6. Centrale nucléaire suivant la revendication 5, caractérisée par le fait que les blocs de support (14, 15) sont reliés par des vis de serrage (30).

7. Centrale nucléaire suivant l'une des revendications 1 à 6, caractérisée par le fait qu'un calorifugeage (35) est disposé sur le tube de support (11).

8. Centrale nucléaire suivant l'une des revendications 1 à 7, caractérisée par le fait qu'une bague d'étanchéité (33), qui s'étend jusqu'au niveau du pourtour extérieur de la tubulure (5) véhiculant le fluide de refroidissement, est fixée sur la face intérieure du tube de support (11).

9. Centrale nucléaire suivant l'une des revendications 1 à 8, caractérisée par le fait que des tubes de support (11) sont prévus sur toutes les tubulures (5) de la boucle de circulation du fluide de refroidissement d'un réacteur à eau sous pression.

**Claims**

1. Nuclear power plant with a metallic reactor pressure vessel (2) which has coolant connecting pieces, (5) for connecting coolant lines (4) and is surrounded by a concrete biological shield (1) in which the reactor pressure vessel is held with a support (7) engaging on the coolant connecting pieces, characterised in that the support (7) includes at least one supporting tube (11) surrounding a coolant connecting piece (5), the supporting tube (11) being anchored with its inner surface (22) on the coolant connecting piece (5) and with its outer surface (23) on the biological shield (1).

2. Nuclear power plant according to claim 1, characterised in that the anchoring includes dogs (17) which project into recesses (18) in form-fitting manner.

3. Nuclear power plant according to claim 2, characterised in that between the recesses (18) and the dogs (17) there is a play of 0.1 to 0.5 mm.

4. Nuclear power plant according to claim 1, 2 or 3, characterised in that the supporting tube (11) is of cylindrical construction and is held at two positions (16, 19) along the longitudinal axis by means of four dogs (17) offset by 90°.

5. Nuclear power plant according to claim 4, characterised in that the supporting tube (11) is secured on two preferably square support plates (14, 15) which are secured on opposite sides of a concrete wall of the biological shield (1).

6. Nuclear power plant according to claim 5, characterised in that the support plates (14, 15) are joined together by clamping screws (30).

7. Nuclear power plant according to one of claims 1 to 6, characterised in that a heat insulator (35) is disposed on the supporting tube (11).

8. Nuclear power plant according to one of claims 1 to 7, characterised in that on the inner surface of the supporting tube (11) there is secured a sealing ring (33) extending to the outer periphery of the coolant connecting piece (5).

9. Nuclear power plant according to one of claims 1 to 8, characterised in that supporting tubes (11) are provided on all the coolant connecting pieces (5) of the coolant loops of a pressurised water reactor.

FIG 1

FIG 3

FIG 2